# EUROPEAN PATENT SPECIFICATION

(11) **EP 3 480 901 B1**
(45) Date of publication and mention of the grant of the patent: **19.02.2020**
(21) Application number: 17200075.4
(22) Date of filing: 06.11.2017
(51) Int. Cl.: H01R 39/24, H01R 39/46

(54) **VIBRATION ABSORBING DEVICE FOR SLIP-RING BRUSHES**
SCHWINGUNGSDÄMPFENDE VORRICHTUNG FÜR GLEITRINGBÜRSTEN
DISPOSITIF D'ABSORPTION DE VIBRATIONS POUR BROSSES À BAGUE COLLECTRICE

(43) Date of publication of application: 08.05.2019
(73) Proprietor: Schleifring GmbH, 82256 Fürstenfeldbruck (DE)
(72) Inventor: VOGL, Christian, 82239 Alling (DE); REHDER, Jan, 81541 München (DE); HEINBUCH, Peter, 82256 Fürstenfeldbruck (DE); CORDING, Bastian, 82211 Breitbrunn (DE); DOLL, Marvin, 82284 Grafrath (DE)
(74) Representative: Lohr, Jöstingmeier & Partner

(56) References cited:
- JP-A- H0 993 877
- JP-A- H01 132 075
- JP-U- S 598 275
- JP-U- S50 144 202
- JP-U- S56 139 373
- US-A1- 2003 015 934

## Description

### Field of the invention

The invention relates to Slip-rings and brushes for Slip-Rings for transmission of electrical signals between rotating parts. Specifically, it relates to a vibration absorbing and stabilizing device for gold wire brushes.

### Description of the related art

Electrical slip rings are used to transfer electrical power and/or signals between a rotating and a stationary part. Such slip rings are used in different applications, like wind energy plants or computer tomography scanners. There are also many military and aerospace applications in which slip rings are used.

It is common to all these applications, that a high lifetime and a low contact resistance as well as a low contact noise are required. Furthermore, in specific applications like a CT scanner with high rotation speeds and applications with repetitive high accelerations like robots and pick & place machines specific attention is required. The same applies for specific environmental requirements like in aerospace applications.

Slip rings are generally based on a first part having sliding tracks and a second part having brushes for sliding on the sliding tracks by a rotational movement. Due to external interference or by changes in friction, interfering movements of the brush other than the rotational movement or oscillations of the brush may occur. Specifically, if the excitation mechanism is based on friction effects, the term frictional induced vibration for these interfering movements is used. Such interfering movements may cause contact noise and/or contact interruptions, adversely affecting signal quality. In applications with an inductive load, electrical arcing may occur during such interruptions, which leads to significant corrosion and wear of the brush and the sliding track. As long as minimum arcing voltage and minimum arcing current e.g. 100 mA and 12 V for gold-gold contacts is exceeded also purely ohmic circuits will be subjected to arcing. At lower values still melting can occur with subsequent damage and wear.

EP 066 27 36 A1 discloses a multi-fiber brush where a strand of multiple thin fibers is used for contacting a sliding track. Due to the internal friction between the individual fibers, oscillations are suppressed. The drawback is the complex design having multiple thin wires held by a ferrule, which is expensive and difficult to manufacture. Furthermore, the fiber bundle has a comparatively large diameter and therefore requires a broad sliding track.

An electrical contact brush with an absorbing material is disclosed in JP S598275U.

A sliding brush with absorbing material is disclosed in JP S56139373.

An axial direction sliding contact type brush apparatus having brushes which are held in ultraviolet cured acryl-based resin is disclosed in US 2003/015934 A1.

JP H0993877 discloses a sliding contact with an absorbing material.

JP S50144202U discloses a slipring contact with an absorbing polymer material.

JP H01132075 discloses a slipring assembly.

### Summary of the invention

The problem to be solved by the invention is to stabilize a sliding brush and preferably a wire brush for a slipring such that oscillations and/or interfering movements are reduced. This may further lead to a reduction of contact noise, an increase in signal quality, lifetime and reliability of the brush. The same applies to a slipring comprising a brush and a sliding track. The solution should be simple and inexpensive. Preferably it does not require a change in the design of existing brush blocks or slip rings. The solution should be usable for retrofitting existing brushes.

A solution of the problem are described in the independent claim. The dependent claims relate to further improvements of the invention.

### Description of Drawings

In the following the invention will be described by way of example, without limitation of the general inventive concept, on examples of embodiment with reference to the drawings.
- Figure 1: shows a side view of a slipring assembly.
- Figure 2: shows a sectional view of a slipring assembly.
- Figure 3: shows enlarged details of figure 2.
- Figure 4: shows an embodiment with fixation devices.
- Figure 5: shows a short side view of an absorbing device.
- Figure 6: shows a sectional view.
- Figure 7: shows a top view of the housing.
- Figure 8: shows a side view of the housing.

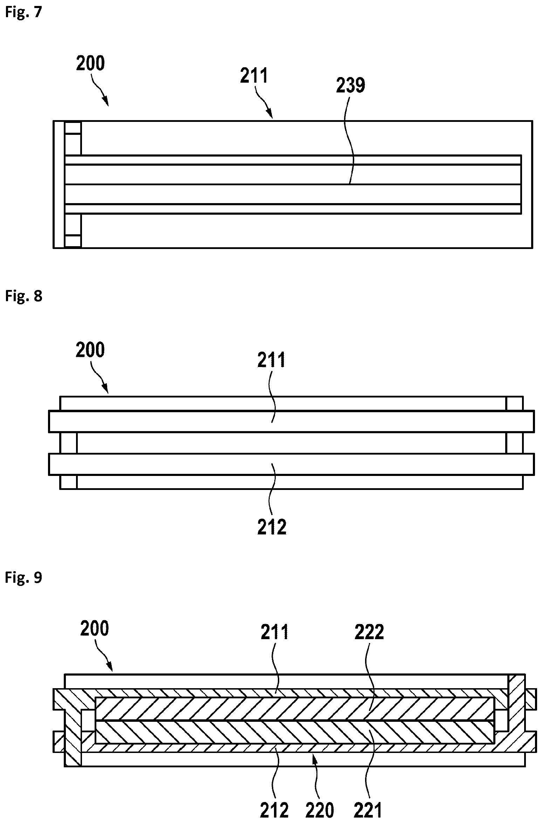

- Figure 8: shows a sectional side view of the housing.

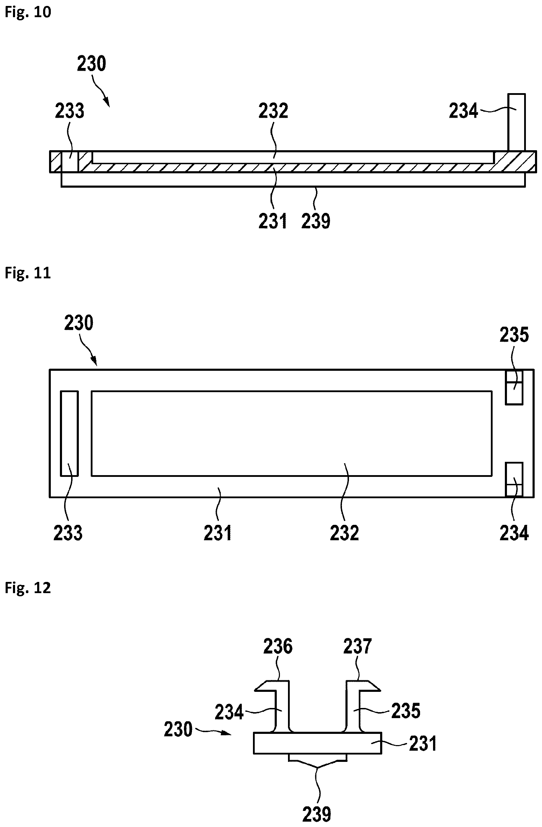

- Figure 10: shows a sectional side view of a housing part.
- Figure 11: shows a top view of a housing part.
- Figure 12: shows a front view of a housing part.

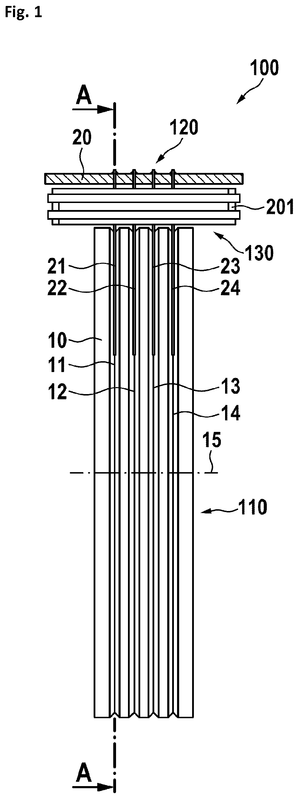

In Figure 1, a side view of a slipring assembly is shown. A slip-ring assembly 100 comprises a slip-ring module 110 and a slip-ring brush block 120. The slip-ring module 110 may rotate about the rotation axis 15 and preferably comprises an insulating body 10, having a plurality of sliding tracks. Here, four sliding tracks 11, 12, 13, and 14 are shown. It is obvious, that there may be any other number of sliding tracks. The sliding tracks are embedded and/or held by the insulating body. Preferably, the sliding tracks are insulated against each other. There may also be configurations, where at least some of the sliding tracks are connected together electrically. This may be useful for transferring higher currents or signals with a lower noise level. Here, a preferred embodiment of sliding tracks having V-shaped grooves is shown. These V-grooves have the advantage that they can guide wires sliding on them and keep them precisely on a predetermined track. It is obvious that any other type of sliding track may be used instead, like tracks having multiple grooves or tracks without grooves, having a plane surface.

The slip-ring brush block comprises a brush carrier 20 which may comprise a printed circuit board or any other insulating material. It may also comprise a conducting material like a metal, with insulated portions for holding the brushes. The brush block preferably holds a plurality of sliding brushes. In this embodiment, four wire brushes 21, 22, 23, 24 are shown. It is obvious, that there may be any other number of brushes and any other kind of brushes. For example, there may be multi-fiber brushes or carbon brushes. The brushes are spaced such that they fit to corresponding sliding tracks of the slip-ring module. There must not necessarily be one brush per sliding track. There may also be a plurality of brushes contacting a sliding track to increase current capability and/or reduce noise and/or contact resistance. A first absorbing device 201 is provided at the four wire brushes 21, 22, 23, 24 to reduce vibrations and/or oscillations. The first absorbing device 201 may only cover a smaller number of brushes, or there may be multiple absorbing devices, each device covering a smaller number of brushes.

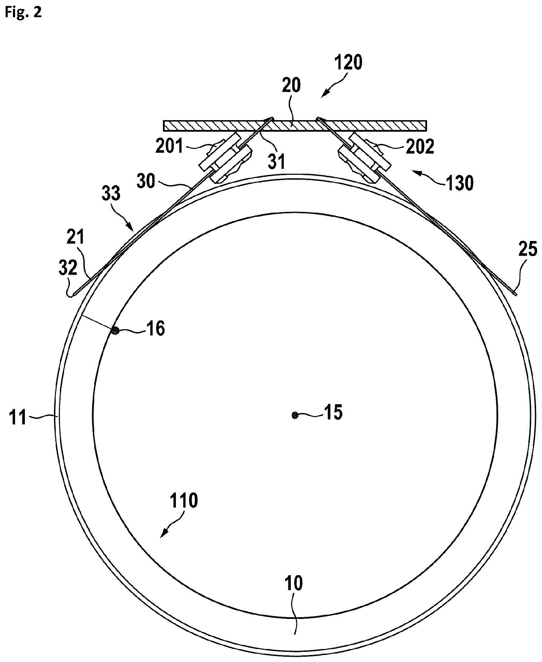

In figure 2, a sectional view of the first embodiment is shown in a plane cut through lines A-A in figure 1. It is preferred, if the slip-ring module has a free bore, for example for carrying cables. A connector 16 is shown, which may be a soldering point or soldering pin or a connector, which contacts the first sliding track 11. A connecting cable may be soldered to this connector. Preferably, the other sliding tracks also have connectors to contact the sliding tracks from the inner side of the insulating body. In this embodiment, first sliding brush 21 and fifth sliding brush 25 contact first sliding track 11. Here, a first absorbing device 201 and a second absorbing device 202 are shown. Furthermore, details of a general sliding brush 30 are shown. The sliding brush 30 has a first end 31 by which it is preferably held by a brush carrier 20. Opposing thereto is a second end 32. Between the first end 31 and the second end 32 is a contact section 33. This contact section is designed for contacting the sliding track. Preferably, an absorbing device 201 is arranged between the first end and the contact section.

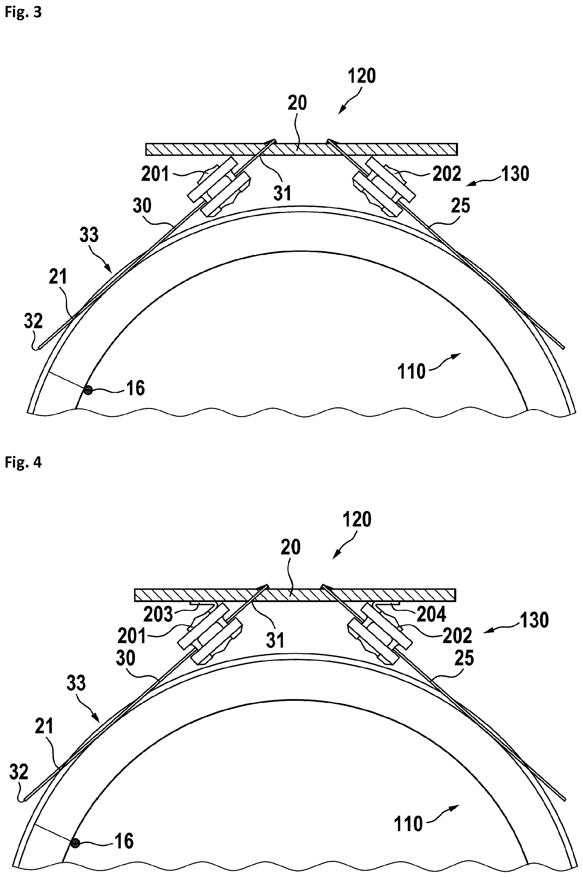

In figure 3, a detail of figure 2 is shown. Here, details of the absorbing devices can be better seen.

Figure 4 shows a slightly modified embodiment of figure 3. Here, the absorbing devices 201, 202 are held by first fixation means 203 and second fixation means 204 to the brush carrier.

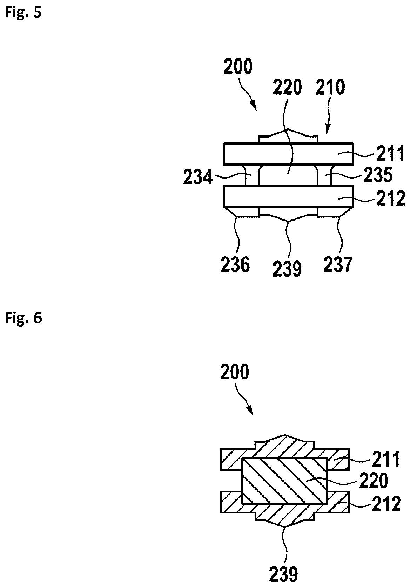

In figure 5 a short side view of an absorbing device 200 is shown. The absorbing device has a housing 210 comprising a first housing part 211 and a second housing part 212. Details of the housing parts be shown in more detail later.

Figure 6 shows a sectional view of figure 5. This clearly shows the elastic absorbing material 220 between the housing parts. The fillet 239 is beneficial for larger housing parts as it increases stability.

Figure 7 shows a top view of the housing.

Figure 8 shows a side view of the housing.

Figure 9 shows a sectional side view. This also shows, how two identical housing parts 211, 212 are connected together to form a housing. For assembly, a second housing part may be placed upside down and rotated about 180 degrees on a first housing part. Here, the elastic absorbing material 220 may comprise a first layer 221 and a second layer 222. There may also be any other number of layers. Preferably, the absorbing material parts are dimensioned in such a way that they enclose the sliding brushes when the housing parts are connected mechanically to a housing.

Figure 10 shows a sectional side view of a housing part 230. It has a base 231 with a groove 232 for the elastic absorbing material (not shown here) and a fillet 239 for increasing stability. For assembly with another housing part to form a housing, cantilever snap arms 234, 235 at one side and a matching opening 233 at the other side are provided.

Figure 11 shows a top view of a housing part.

Figure 12 shows a front view of a housing part. Here, a first cantilever snap arm 234 having a first projection 236 and a second cantilever snap arm 235 having a second projection 237 are shown.

### List of reference numerals

- 10: insulating body
- 11: first sliding track
- 12: second sliding track
- 13: third sliding track
- 14: fourth sliding track
- 15: rotation axis
- 16: connector
- 20: brush carrier
- 21: first sliding brush
- 22: second sliding brush
- 23: third sliding brush
- 24: fourth sliding brush
- 25: fifth sliding brush
- 30: sliding brush
- 31: sliding brush first end
- 32: sliding brush second end
- 33: contact section
- 100: slip-ring assembly
- 110: slip-ring module
- 120: slip-ring brush block
- 130: sliding brush assembly
- 200: absorbing device
- 201: first absorbing device
- 202: second absorbing device
- 203: first fixation means
- 204: second fixation means
- 210: housing
- 211: first housing part
- 212: second housing part
- 220: elastic absorbing material
- 221: first absorber section
- 222: second absorber section
- 230: housing part
- 231: base
- 232: groove
- 233: opening
- 234: first cantilever snap arm
- 235: second cantilever snap arm
- 236: first projection
- 237: second projection
- 239: fillet

## Claims

1. Sliding brush assembly (130) for a slipring, comprising at least one sliding brush (21, 22, 23,24, 30), the at least one sliding brush (21, 22, 23,24, 30) comprising a first end (31) for holding the at least one sliding brush (21, 22, 23,24, 30), opposing thereto a second end (32) and a contact section (33) between the ends,
the at least one sliding brush (21, 22, 23,24, 30) further comprising a metal wire or metal sheet, and
an absorbing device (201, 202) to reduce vibrations and/or oscillations is attached to the at least one sliding brush (21, 22, 23,24, 30),
**characterized in, that**
the absorbing device (201, 202) comprising a housing (210) enclosing an elastic absorbing material (220), and
at least a section of the at least one sliding brush (21, 22, 23,24, 30) is enclosed by the absorbing material (220) and/or the absorbing material (220) is penetrated by the at least one sliding brush (21, 22, 23,24, 30).

2. Sliding brush assembly (130) according to claim 1,
**characterized in, that**
the elastic absorbing material (220) comprises a polymer.

3. Sliding brush assembly (130) according to any one of the preceding claims,
**characterized in, that**
the elastic absorbing material (220) comprises at least one of a foam, an elastomer and a gel.

4. Sliding brush assembly (130) according to any one of the preceding claims,
**characterized in, that**
the absorbing device is attached to the at least one sliding brush (21, 22, 23,24, 30) between the first end (31) and the contact section (33).

5. Sliding brush assembly (130) according to any one of the preceding claims,
**characterized in, that**
the housing (210) comprises elastic absorbing material (220, 221) which preferably comprises at least one of a foam, an elastomer and a gel.

6. Sliding brush assembly (130) according to any one of the preceding claims,
**characterized in, that**
the housing (210) comprises two identical housing parts (211, 212) having an elongated base (231) with a snap arm (234, 235) at one side and at the opposing side an opening (233) into which the snap-arm (234, 235) fits.

7. Sliding brush assembly (130) according to any one of the preceding claims,
**characterized in, that**
the elongated base (231) has a groove (232) for holding the elastic absorbing material (220).

8. Sliding brush assembly (130) according to any one of the preceding claims,
**characterized in, that**
a pre-fabricated housing part comprises a sheet of elastic absorbing material.

9. Sliding brush assembly (130) according to the previous claim,
**characterized in, that**
the sheet of elastic absorbing material is glued or molded to the housing part.

10. Sliding brush assembly (130) according to the previous claim,
**characterized in, that**
at least one housing part comprises at least one fillet (239), preferably in longitudinal direction.

11. Slip ring brush block (120, 420) comprising at least one Sliding brush assembly (130) according any one of the previous claims.

12. Slip ring assembly (100) comprising a slip-ring module (110) further comprising at least one sliding track (11, 12, 13, 14) and a slip-ring brush block (120, 420) according to the previous claim.

## Patentansprüche

1. Gleitbürstenanordnung (130) für einen Schleifring, umfassend mindestens eine Gleitbürste (21, 22, 23, 24, 30), wobei die mindestens eine Gleitbürste (21, 22, 23, 24, 30) ein erstes Ende (31) zum Halten der mindestens einen Gleitbürste (21, 22, 23, 24, 30), diesem gegenüberliegend ein zweites Ende (32) und ein Kontaktabschnitt (33) zwischen den Enden umfasst, wobei die mindestens eine Gleitbürste (21, 22, 23, 24, 30) ferner einen Metalldraht oder ein Metallblech umfasst, und
eine Absorptionsvorrichtung (201, 202) zum Reduzieren von Vibrationen und/oder Oszillationen an der mindestens einen Gleitbürste (21, 22, 23, 24, 30) angebracht ist,
**dadurch gekennzeichnet, dass**
die Absorptionsvorrichtung (201, 202) ein Gehäuse (210) umfasst, das ein elastisches Absorptionsmaterial (220) umschließt, und
mindestens ein Abschnitt der mindestens einen Gleitbürste (21, 22, 23, 24, 30) von dem Absorptionsmaterial (220) umschlossen ist und/oder das Absorptionsmaterial (220) von der mindestens einen Gleitbürste (21, 22, 23, 24, 30) durchdrungen ist.

2. Gleitbürstenanordnung (130) nach Anspruch 1,
**dadurch gekennzeichnet, dass**
dass das elastische Absorptionsmaterial (220) ein Polymer umfasst.

3. Gleitbürstenanordnung (130) nach einem der vorhergehenden Ansprüche,
**dadurch gekennzeichnet, dass**
das elastische Absorptionsmaterial (220) mindestens eines von einem Schaum, einem Elastomer und/oder einem Gel umfasst.

4. Gleitbürstenanordnung (130) nach einem der vorhergehenden Ansprüche,
**dadurch gekennzeichnet, dass**
die Absorptionsvorrichtung an mindestens einer Gleitbürste (21, 22, 23, 24, 30) zwischen dem ersten Ende (31) und dem Kontaktabschnitt (33) angebracht ist.

5. Gleitbürstenanordnung (130) nach einem der vorhergehenden Ansprüche,
**dadurch gekennzeichnet, dass**
das Gehäuse (210) ein elastisches Absorptionsmaterial (220, 221) umfasst, das vorzugsweise mindestens eines aus einem Schaum, einem Elastomer und einem Gel umfasst.

6. Gleitbürstenanordnung (130) nach einem der vorhergehenden Ansprüche,
**dadurch gekennzeichnet, dass**
das Gehäuse (210) zwei identische Gehäuseteile (211, 212) mit einer länglichen Basis (231) mit einem Schnapparm (234, 235) an einer Seite und an der gegenüberliegenden Seite eine Öffnung (233) umfasst, in welche Schnapparm (234, 235) passt.

7. Gleitbürstenanordnung (130) nach einem der vorhergehenden Ansprüche,
**dadurch gekennzeichnet, dass**
die längliche Basis (231) eine Nut (232) zum Halten des elastischen Absorptionsmaterials (220) hat.

8. Gleitbürstenanordnung (130) nach einem der vorhergehenden Ansprüche,
**dadurch gekennzeichnet, dass**
ein vorgefertigtes Gehäuseteil ein Blatt aus elastischem Absorptionsmaterial umfasst.

9. Gleitbürstenanordnung (130) nach dem vorhergehenden Anspruch,
**dadurch gekennzeichnet, dass**
das Blatt aus elastischem Absorptionsmaterial an das Gehäuseteil angeklebt oder angeformt ist.

10. Gleitbürstenanordnung (130) nach dem vorhergehenden Anspruch,
**dadurch gekennzeichnet, dass**
mindestens ein Gehäuseteil mindestens eine Leiste (239) aufweist, vorzugsweise in Längsrichtung.

11. Schleifringbürstenblock (120, 420) mit mindestens einer Gleitbürstenanordnung (130) nach einem der vorhergehenden Ansprüche.

12. Schleifringanordnung (100) umfassend ein Schleifringmodul (110), weiterhin mindestens eine Schleifbahn (11, 12, 13, 14) und einen Schleifringbürstenblock (120, 420) nach dem vorhergehenden Anspruch umfassend.

## Revendications

1. Ensemble balai coulissant (130) pour une bague collectrice, comprenant au moins un balai coulissant (21, 22, 23, 24, 30), l'au moins un balai coulissant (21, 22, 23, 24, 30) comprenant une première extrémité (31) pour maintenir l'au moins un balai coulissant (21, 22, 23, 24, 30), opposée à celle-ci une seconde extrémité (32) et une section de contact (33) entre les extrémités,
l'au moins un balai coulissant (21, 22, 23, 24, 30) comprenant en outre un fil en métal ou une feuille en métal, et
un dispositif absorbant (201, 202) pour réduire des vibrations et/ou des oscillations est fixé à l'au moins un balai coulissant (21, 22, 23, 24, 30),
**caractérisé en ce que**
le dispositif absorbant (201, 202) comprend un boîtier (210) encloisonnant un matériau absorbant élastique (220), et
au moins une section de l'au moins un balai coulissant (21, 22, 23, 24, 30) est encloisonnée par le matériau absorbant (220) et/ou le matériau absorbant (220) est pénétré par l'au moins un balai coulissant (21, 22, 23, 24, 30).

2. Ensemble balai coulissant (130) selon la revendication 1,
**caractérisé en ce que**
le matériau absorbant élastique (220) comprend un polymère.

3. Ensemble balai coulissant (130) selon l'une quelconque des revendications précédentes,
**caractérisé en ce que**
le matériau absorbant élastique (220) comprend au moins l'un d'une mousse, d'un élastomère et d'un gel.

4. Ensemble balai coulissant (130) selon l'une quelconque des revendications précédentes,
**caractérisé en ce que**
le dispositif absorbant est fixé à l'au moins un balai coulissant (21, 22, 23, 24, 30) entre la première extrémité (31) et la section de contact (33).

5. Ensemble balai coulissant (130) selon l'une quelconque des revendications précédentes,
**caractérisé en ce que**
le boîtier (210) comprend un matériau absorbant élastique (220, 221) qui comprend de préférence au moins l'un d'une mousse, d'un élastomère et d'un gel.

6. Ensemble balai coulissant (130) selon l'une quelconque des revendications précédentes,
**caractérisé en ce que**
le boîtier (210) comprend deux parties de boîtier identiques (211, 212) ayant une base allongée (231) avec un bras d'emboîtement (234, 235) d'un côté et du côté opposé une ouverture (233) dans laquelle le bras d'emboîtement (234, 235) s'ajuste.

7. Ensemble balai coulissant (130) selon l'une quelconque des revendications précédentes,
**caractérisé en ce que**
la base allongée (231) comporte une rainure (232) pour maintenir le matériau absorbant élastique (220).

8. Ensemble balai coulissant (130) selon l'une quelconque des revendications précédentes,
**caractérisé en ce que**
une partie de boîtier préfabriquée comprend une feuille en matériau absorbant élastique.

9. Ensemble balai coulissant (130) selon la revendication précédente,
**caractérisé en ce que**
la feuille en matériau absorbant élastique est collée ou moulée sur la partie de boîtier.

10. Ensemble balai coulissant (130) selon la revendication précédente,
**caractérisé en ce que**
au moins une partie de boîtier comprend au moins un congé de raccordement (239), de préférence en direction longitudinale.

11. Bloc de balai de bague collectrice (120, 420) comprenant au moins un ensemble balai coulissant (130) selon l'une quelconque des revendications précédentes.

12. Ensemble bague collectrice (100) comprenant un module de bague collectrice (110) comprenant en outre au moins une gorge de coulissement (11, 12, 13, 14) et un bloc de balai de bague collectrice (120, 420) selon la revendication précédente.
